# EUROPÄISCHE PATENTSCHRIFT

(11) **EP 2 433 744 B1**
(45) Veröffentlichungstag und Bekanntmachung des Hinweises auf die Patenterteilung: **10.07.2013**
(21) Anmeldenummer: 11182323.3
(22) Anmeldetag: 22.09.2011
(51) Int. Cl.: B23Q 7/03, B24B 27/06, B24B 41/06, B65G 21/20, B65H 7/02

(54) **Transportvorrichtung mit Vakuumsystem für eine Bearbeitungsvorrichtung**
Transport device with vacuum system for a processing device
Dispositif de transport doté d'un système sous vide pour un dispositif de traitement

(30) Priorität: 24.09.2010 DE 202010013582 U
(43) Veröffentlichungstag der Anmeldung: 28.03.2012
(73) Patentinhaber: Weeke Bohrsysteme GmbH, 33442 Herzebrock-Clarholz (DE)
(72) Erfinder: Settele, Martin, 59227 Ahlen (DE)
(74) Vertreter: HOFFMANN EITLE

(56) Entgegenhaltungen:
- EP-A1- 0 769 715
- EP-A1- 2 196 416
- EP-A2- 2 189 404
- DE-A1- 2 939 571
- DE-A1- 10 218 524

## Beschreibung

### Gebiet der Erfindung

Die Erfindung betrifft eine Transportvorrichtung einer Bearbeitungsvorrichtung für plattenförmige Werkstücke, und ein Verfahren um das Werkstück auf dem der Transportvorrichtung zu halten.

### Stand der Technik

Beim Transportieren von Werkstücken, die von einer Bearbeitungsstation bearbeitet werden sollen, ist es wichtig, dass sich diese Werkstücke während der Bearbeitung nicht auf dem Transportband bewegen. Dabei können die Kräfte, die auf das Werkstück wirken, groß werden, so dass eine entsprechende Haltekraft ebenfalls ausreichend groß sein muss. Um dies zu gewährleisten, gibt es verschiedene Ansätze, beispielsweise können die Werkstücke in eine Haltevorrichtung positioniert werden, die selbst fest auf dem Transportband angebracht ist. Für flächige Bearbeitungsverfahren, wie beispielsweise das Abschleifen eines lattenförmigen Werkstücks eignet sich eine solche Methode jedoch nicht, da zum Befestigen des Werkstücks oft Halter verwendet werden, die ein Bearbeitungswerkzeug bei der Oberflächenbearbeitung behindern können, weil sie einen Teil der oberen Plattenoberfläche abdecken. Daher werden solche Werkstücke mittels eines Vakuumsystems auf den Transportband gehalten. Dazu ist zwischen den Laufrollen unter der oberen Auflagefläche des Transportbands eine Unterdruckkammer vorhanden und das Transportband luftdurchlässig ausgestaltet, so dass ein Plattenstück, das auf den Transportband liegt, mit Hilfe des Unterdrucks, der in der Unterdruckkammer aufrechterhalten wird, auf dem Transportband gehalten, sozusagen festgesaugt wird.

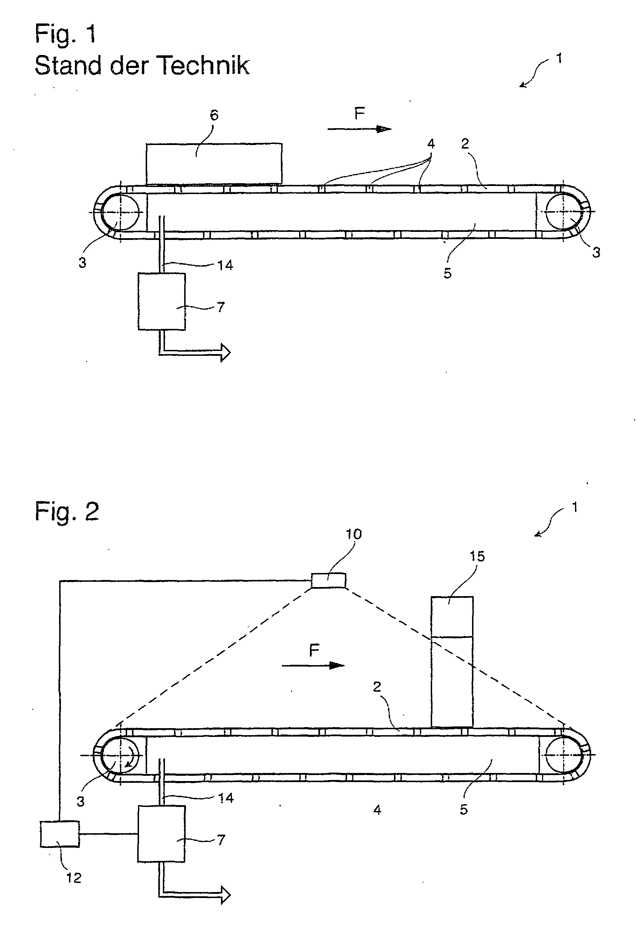

Figur 1 zeigt die Standardkomponenten eines solchen Vakuumsystems, bei der ein Transportband 2 an zwei Lagerrädern 3 in einer Förderrichtung S endlos umläuft. Das Transportband ist mit Löchern 4 versehen, so dass der in der Unterdruckkammer 5 erzeugte Unterdruck durch das Transportband auf ein darauf befindliches Eckstück 6 wirken kann. Dadurch kann das Werkstück 6 während es in Förderrichtung F gefördert wird auf den Transportband 2 gehalten werden. Der Unterdruck in der Unterdruckkammer 5 wird durch eine Saugvorrichtung 7 erzeugt, die die Luft aus der Unterdruckkammer 5 durch ein Rohrsystem absaugt und bspw. in die Umgebung ausstößt. So wird in der Unterdruckkammer 5 ein konstanter Unterdruck aufrecht erhalten. Ein Nachteil dieses Systems ist, dass auch wenn sich kein Werkstück auf dem Transportband befindet, die Saugvorrichtung mit einer konstanten Arbeitsleistung arbeitet und somit unnötig Energie verbraucht.

Dieses Problem wird in der EP 2 196 416 A1 so gelöst, dass hinter einem Ventilator, der als Saugvorrichtung eingesetzt wird, eine Volumenstromregelengseinrichtung, genauer gesagt eine Drosselklappe, angeordnet ist, die den Volumenstrom regeln soll. Dabei wird die Drosselklappe geschlossen, wenn sich kein Werkstück auf dem Transportband befindet. Da der Ventilator 7 jedoch weiter in einer konstanten Drehzahl läuft, muss immer noch die Energie für eine konstante Drehzahl bereitgestellt werden.

Als weiterer Stand der Technik ist die EP 2 189 404 A1 bekannt, die eine Falzmaschine offenbart.

### Darstellung der Erfindung

Es ist daher eine Aufgabe der vorliegenden Erfindung ein Vakuumsystem für eine Transportvorrichtung für eine Bearbeitungseinrichtung bereitzustellen, das eine ökonomischere Nutzung einer Saugvorrichtung im Betrieb der Transportvorrichtung ermöglicht.

Diese Aufgabe wird mit einer Bearbeitungsvorrichtung mit den Merkmalen des Anspruchs 1 gelöst. Weitere die Erfindung ausgestaltende Merkmale sind in den Unteransprüchen enthalten.

Eine erfindungsgemäße Transportvorrichtung zum Transport eines oder mehrerer Werkstücke für eine Bearbeitungsvorrichtung umfasst eine Fördereinrichtung, auf der das zumindest eine Werkstück getragen und bearbeitet wird, eine Saugvorrichtung, die zum Halten des zumindest einen Werkstücks auf der Fördereinrichtung bevorzugt unter dieser ein Unterdruck erzeugt, wobei die Fördereinrichtung luftdurchlässig ist oder zumindest einen luftdurchlässigen Abschnitt aufweist, so dass ein auf der Fördereinrichtung befindliches Werkstück mittels des durch die Saugvorrichtung erzeugten Unterdruck auf der Fördereinrichtung gehalten werden kann. Ferner umfasst die Transportvorrichtung eine Sensoreinrichtung und ein Steuerelement, mittels denen ein Belegungsverhältnis zwischen Werkstück und Fördereinrichtung, bzw. dem luftdurchlässigen Abschnitt der Fördereinrichtung berechnet werden kann. Die Steuervorrichtung steuert die Saugvorrichtung so, dass diese einen Unterdruck unter der Auflagefläche der Fördereinrichtung in Abhängigkeit des Belegungsverhältnisses erzeugt. Dadurch wird im Leerlauf des Transportbandes die Saugvorrichtung auf eine Minimaldrehzahl heruntergeregelt, wodurch im Leerlaufbetrieb weniger Energie verbraucht wird.

Bevorzugt läuft die Saugvorrichtung auf Maximaldrehzahl an, wenn das Werkstück eine ausreichende Fläche auf der Fördereinrichtung, bzw. auf dem luftdurchlässigen Abschnitt der Fördereinrichtung abdeckt, damit das Werkstück auf der Saugvorrichtung gehalten wird. Dies kann bevorzugt bei Erreichen eines bestimmten Prozentbereichs des Belegungsverhältnisses geschehen. Dies stellt sicher, dass das Werkstück erst dann angesaugt wird, wenn es auch auf der Fördereinrichtung gehalten werden kann.

Die Drehzahl der Saugvorrichtung nimmt ausgehend von der Maximaldrehzahl stetig, insbesondere aber linear bis zu einem Belegungsverhältnis von 75%-100% ab. Dadurch kann weiter vermieden werden, dass der Energieverbrauch nicht nur im Leerlauf unnötig hoch ist, sondern die Bearbeitungsvorrichtung kann dadurch auch eine konstante Haltekraft gewährleisten und während des Betriebs ökonomisch betrieben werden.

Bevorzugt läuft die Saugvorrichtung bei einem Belegungsverhältnis von 75%-100% mit einer Minimaldrehzahl, die größer, bevorzugt aber gleich der Drehzahl der Saugvorrichtung im Leerlauf der Bearbeitungsvorrichtung ist. Dadurch wird ebenfalls eine ökonomischere Verwendung der Bearbeitungsvorrichtung ermöglicht.

Bevorzugt wird die Drehzahl der Saugvorrichtung durch die Zufuhr von Energie gesteuert und die Saugvorrichtung umfasst weiter vorzugsweise einen Ventilator.

Die Verringerung der Drehzahl wird bevorzugt entlang einer im Wesentlichen linearen Kennlinie oder in Stufen durchgeführt.

### Kurze Beschreibung der Zeichnungen

Figur 1 zeigt eine Transportvorrichtung mit einem Vakuumsystem gemäß dem Stand der Technik;
Figur 2 zeigt eine Transportvorrichtung mit einem erfindungsgemäßen Vakuumsystem;
Figur 3 zeigt ein Transportband mit einem Werkstück, einem luftdurchlässigen Abschnitt als Gitter und Löchern in einer Draufsicht;
Figuren 4a und 4b zeigen jeweils einen Graph der ein Verhältnis von Belegungsverhältnis des Transportbandes zum Unterdruck in der Unterdruckkammer zeigt.

### Beschreibung der bevorzugten Ausführungsformen

Der Aufbau einer erfindungsgemäßen Transportvorrichtung 1 ist im Wesentlichen derselbe wie im Stand der Technik. Daher werden für gleiche Teile die gleichen Bezugszeichen verwendet. Die Transportvorrichtung 1 ist für eine für eine Bearbeitungsvorrichtung vorgesehen, die im Wesentlichen spanende Bearbeitungen (Bohren, Fräsen, Hobeln, Sägen, Schleifen, usw.) an bevorzugt plattenförmigen Werkstücken durchführt. Die in der Bearbeitungsvorrichtung vorhandene Bearbeitungseinheit 15 ist in Figur 2 schematisch als angedeutet. Eine solche Bearbeitungseinheit 15 kann bspw. eine übliche und bekannte CNC-Bearbeitungseinheit sein.

In Figur 2 ist eine erfindungsgemäße Vorrichtung abgebildet. Ebenso wie bekannte Systeme enthält die Transportvorrichtung eine Fördereinrichtung wie ein Transportband 2, das an zumindest zwei Laufrollen 3 gelagert ist. Von diesen ist eine Laufrolle 3 bevorzugt eine Antriebsrolle (siehe z.B. Figur 2, die linke Laufrolle). Unter der Fördereinrichtung 2, bzw. unter der Oberfläche der Fördereinrichtung 2, auf der das Werkstück 6 getragen wird, ist eine Unterdruckkammer 5 vorgesehen, deren Unterdruck von der Saugvorrichtung 7 erzeugt wird. Die erfindungsgemäße Vorrichtung weist zusätzlich noch eine Sensoreinrichtung 10 auf, die Informationen an eine Steuereinrichtung 12 übermittelt, wie nachfolgend noch genauer erläutert wird. Die Steuereinrichtung 12 steuert die Saugvorrichtung 7 bevorzugt mittels eines Frequenzumrichters, der Teil der Sensoreinrichtung 12 enthalten sein kann, der sich aber ebenso in der Saugvorrichtung 7 befinden kann, dann in Abhängigkeit der von der Sensoreinrichtung 10 übermittelten Signale. Die Haltekraft, die durch den Unterdruck auf die Werkstücke wirkt, muss aufgrund der Bearbeitung der Werkstücke ausreichend groß sein, damit das Werkstück nicht während der Bearbeitung verrutschen kann.

Das Transportband 2 ist luftdurchlässig ausgeführt. Das heißt, dass das Transportband 2 über seine gesamte Fläche mit Löchern 4 oder Schlitzen versehen sein kann oder einen ebenso nur einen luftdurchlässigen Abschnitt 8 aufweist, in dem die Löcher 4 oder die Schlitze in das Transportband 2 eingefügt sind. Das Transportband 2 selbst kann allerdings ebenfalls eine gitterähnliche Struktur oder einen Abschnitt 8 mit gitterähnlicher Struktur aufweisen oder aus einem besonders porösen oder luftdurchlässigen Material hergestellt sein. Ein solches luftdurchlässiges Material könnte ein sehr widerstandsfähiger Stoff oder ein Stoffähnliches Material sein. Das Transportband 2 kann auch Löcher 4, Schlitze oder ein Gitter aufweisen und mit einem luftdurchlässigen Material wie einem Stoff überzogen sein, so dass die auf dem Transportband 2 laufenden Werkstücke 6 durch das luftdurchlässige Material vor einer Beschädigung geschützt werden, beispielsweise durch eine Lage weichen Stoffs, der auf die harte Transportbandoberfläche gelegt wird.

Eine Saugvorrichtung 7 zur Förderung von Luft, bevorzugt eine Pumpe, ein Ventilator, eine Drehkolbenmaschine oder ähnliches, ist zur Erzeugung eines Unterdrucks in der Unterdruckkammer 5 über eine Strömungsleitung 14, bspw. eine Rohrleitung, mit der Unterdruckkammer 5 verbunden. Die Unterdruckkammer 5 ist bevorzugt als eine Kammer ausgeführt, die auf ihrer Oberseite in der gleichen Art und Weise luftdurchlässig ausgebildet ist, wie es vorhergehend für das Transportband 2 beschrieben wurde (Löcher, Schlitze, etc). Die Unterdruckkammer 5 kann ebenso gar keine Oberseite aufweisen.

Die angesaugte Luft wird dann über eine druckseitige Rohrleitung abgeführt. Bevorzugt ist in der Rohrleitung 14 vor der Saugvorrichtung 7 ein Filter (nicht dargestellt) vorgesehen, der Staub oder andere Partikel aus der Luft filtert. So kann die Saugvorrichtung 7 vor Verschmutzungen geschützt und muss nicht so oft gewartet oder überprüft werden.

Mittels der Sensoreinrichtung 10 kann ein Belegungsverhältnis auf der Fördereinrichtung 2 berechnet werden. Das Belegungsverhältnis ist ein Verhältnis zwischen der Fläche aller auf Transportband 2 der Transportvorrichtung 1 liegenden Werkstücke 6 und der Fläche des Transportbandes 2 der Transportvorrichtung 1.

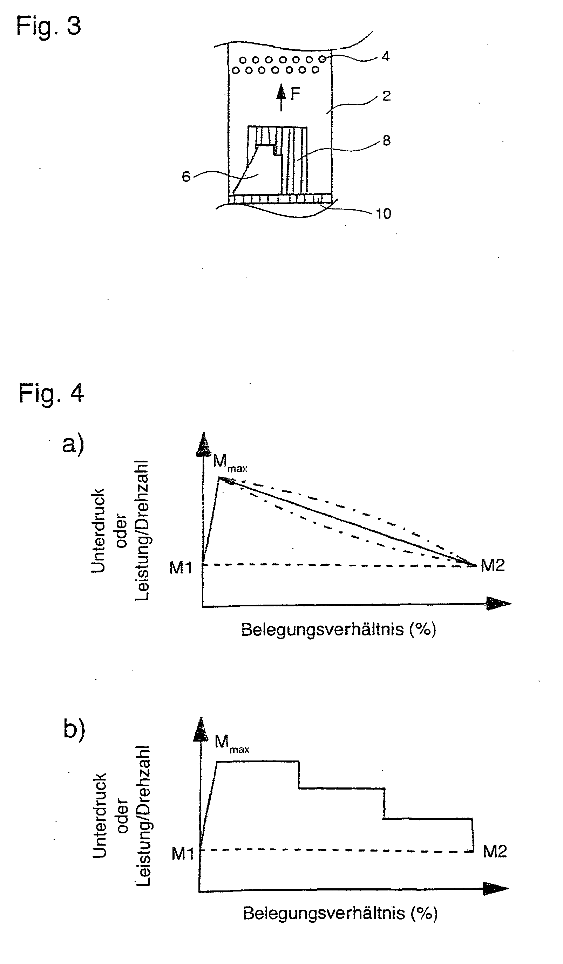

Diese Sensoreinrichtung umfasst vorzugsweise eine Vielzahl von Tastrollen 10 die die Kontur und/oder Fläche erfassen des Werkstücks erfassen (siehe Fig. 3). Die Tastrollen 10 erstrecken sich vorzugsweise quer über dem Transportband 2. Es können in einer vereinfachten Ausführungsform aber auch nur zwei Tastrollen an den beiden Seiten des Transportbands 2 vorgesehen sein, die jeweils an der Seitenkante des Werkstücks entlang laufen. Die Tastrollen 10 sind bevorzugt vor dem Einlaufbereich des Transportbands 2 angeordnet, so dass sie die Kontur erfassen, bevor das Werkstück 6 auf dem Transportband 2. In Fig. 3 sind sie am Anfangsbereich des Transportbandes angeordnet, was ebenfalls ausreicht.

In einer anderen Ausführungsform wird dieses Verhältnis bevorzugt von zumindest einem Bildsensor 10 erfasst, der so angeordnet ist, dass er das Transportband 2 und insbesondere den Einlaufbereich oder Anfangsbereich der Transportvorrichtung 1, an dem die Werkstücke 6 zuerst auf das Transportband 2 gelangen, erkennen kann. Es können aber auch mehrere Bildsensoren in der Sensoreinrichtung 10 vorgesehen sein, die jeweils eigene Abschnitte des Transportbandes 6 überwachen (Anfangsbereich, mittlerer Bereich, Endbereich), oder die für unterschiedliche Erfassungszwecke (bspw. jeweils für das Transportband 2 und für das Werkstück 6) vorgesehen sind. Eine andere Möglichkeit der Ausgestaltung einer Sensoreinrichtung zur Erfassung des Belegungsverhältnisses wären Gewichtsensoren oder Berührungssensoren, die in der Fördereinrichtung, bevorzugt in dem Transportband 2 selbst vorhanden sind, und die den Umriss des Werkstücks 6 im Verhältnis zur unbelegten Fläche des Transportbandes/luftdurchlässigen Abschnitts erfassen können. Auch Kombinationen verschiedener Sensoren sind denkbar. Die Sensoreinrichtung 10 kann Mittel zur Berechnung des Belegungsverhältnisses umfassen.

In der Regel ist die Fläche des Transportbands 2 bekannt, so dass die Sensoreinrichtung 10 lediglich die Fläche des Werkstücks 6 erfassen muss um ein Belegungsverhältnis zu berechnen. Es kann jedoch auch sein, dass die Sensoreinrichtung 10 zusätzlich zur Fläche des Werkstücks 6 ebenfalls die Fläche des Transportbandes 2 oder bevorzugt nur die Fläche des luftdurchlässigen Abschnitts 8 erfasst (der in Figur 3 als Gitterstruktur dargestellt ist). Als luftdurchlässiger Abschnitt 8 wird im Wesentlichen nur der Bereich angesehen, durch den auch Luft hindurchtreten kann. Dadurch wird eine genauere Einstellung des Unterdrucks in der Unterdruckkammer 5 durch die Steuervorrichtung ermöglicht, da tatsächlich nur die belegte luftdurchlässige Fläche berücksichtigt wird.

Anstelle der Sensoreinrichtung 10 kann auch das Steuerelement 12 Mittel umfassen, die zur Berechnung des Belegungsverhältnisses vorgesehen und geeignet sind. Die Sensoreinrichtung 10 kommuniziert mit diesem Steuerelement 12 und übermittelt die erfassten Daten oder das Belegungsverhältnis selbst. Das Steuerelement 12 steuert aufgrund des Belegungsverhältnisses dann die Leistung der Saugvorrichtung (in der Regel die Drehzahl der Pumpe, des Ventilators, der Drehkolbenmaschine, usw.), so dass ein dem Belegungsverhältnisses angemessener Unterdruck in der Unterdruckkammer 5 erzeugt wird.

Im Leerlauf wird die Saugvorrichtung 7 daher auf eine Minimalleistung/-drehzahl M1 heruntergeregelt, da keine Notwendigkeit besteht, eine höhere Leistung zum Halten eines Werkstücks 6 zu erzeugen. Damit herrscht in der Unterdruckkammer 5 auch ein minimaler Unterdruck. Wenn dann ein Werkstück 6 auf das Transportband bewegt wird, erfasst die Sensoreinrichtung 10, dass sich ein Werkstück auf dem Transportband befindet und berechnet ein Belegungsverhältnis oder gibt die erfassten Informationen an das Steuerelement 12 weiter (das dann gegebenenfalls selbst das Belegungsverhältnis berechnet). Das Steuerelement 12 fährt dann die Saugvorrichtung 7 auf die Maximalleistung/-drehzahl Mₘₐₓ, d.h. die höchste im Betrieb verwendete Leistung/Drehzahl, herauf, so dass in der Unterdruckkammer 5 ein Unterdruck entsteht, der geeignet ist das Werkstück schon bei einem geringen Belegungsverhältnis (bspw. 1%-5%) auf dem Transportband mit einer ausreichenden Kraft zu halten. Je nach Fördergeschwindigkeit nimmt das Werkstück dann nach und nach eine größere Fläche auf dem Transportband ein, wodurch ein größeres Belegungsverhältnis entsteht. Dieses wird wiederum von der Sensoreinrichtung 10 erfasst und an das Steuerelement 12 übermittelt. Das Steuerelement 12 steuert dann in Abhängigkeit des ansteigenden Belegungsverhältnisses die Saugvorrichtung 7 bzw. die Leistung/Drehzahl der Saugvorrichtung 7 so herunter, dass die Haltekraft, mit der das Werkstück 6 auf dem Transportband gehalten wird, möglichst konstant bleibt, dabei jedoch immer groß genug ist, um ein Verrutschen des Werkstücks auf dem Transportband zu verhindern. Die Leistung/Drehzahl der Saugvorrichtung 7 kann dabei bevorzugt über die Energiezufuhr der Saugvorrichtung 7 gesteuert werden.

Wenn ein oder mehrere Werkstücke ein bestimmtes Grenzbelegungsverhältnis erreicht haben, das bspw. bei 75%(-100%), bei 85%(-100%) oder auch bei 90%(-100%), 95%(-100%) oder bei 100% liegen kann, kann die Saugvorrichtung dann mit einer Minimalleistung/-drehzahl M2 laufen. Die Minimalleistung/-drehzahl M2 bei erreichen des Grenzbelegungsverhältnisses ist bevorzugt dieselbe, wie die Minimalleistung/-drehzahl M1, wie es auch in Figur 4 zeigt. M2 kann jedoch auch über der Minimaldrehzahl M1 liegen. Beispielsweise kann M2 die Minimaldrehzahl M1 um bis zu 750 U/min oder auch nur 500 U/min übersteigen. Das Abnehmen der Leistung/Drehzahl wird bevorzugt im Wesentlichen linear ausgeführt, kann aber ebenfalls durch eine nach unten oder oben ausgebauchte Linie angenähert werden (siehe Strich-Punkt-Linien in Fig. 4a). Eine andere bevorzugte Ausführungsform steuert die Abnahme der Drehzahl der Saugvorrichtung 7 in Sprüngen. In Figur 4b sind beispielhaft 4 Sprünge dargestellt, die jeweils bei erreichen eines bestimmten Belegungsverhältnisses eingestellt werden. Die Minimaldrehzahl M1 kann dabei z.B. 1500 U/min sein, die Maximaldrehzahl M2 3000 U/min und die beiden Sprünge auf 2000 U/min und 2500 U/min liegen. Es können aber auch fünf oder mehr Sprünge vorhanden sein. So kann dann auch eine lineare Steuerung durchgeführt werden, bspw. indem für jedes Prozent des Belegungsverhältnisses ein Sprung durchgeführt wird (in dem Fall 100 Sprünge). Der Bereich, in dem die Sprünge durchgeführt werden können dabei zwar beliebig gewählt werden, bevorzugt ist allerdings nach dem Hochfahren auf Maximaldrehzahl, dass die Sprünge in regelmäßigen Abständen geschehen. Ausgehend von vier Sprüngen könnte dies bspw. bei einem Belegungsverhältnis von 20%-40% beim ersten Sprung, 40%-60% für den zweiten Sprung und 60%-80%, sowie 80%-100% für den dritten und vierten Sprung sein. Die Verringerung der Drehzahl in Sprüngen vereinfacht die Ausführbarkeit und ist dennoch effektiv in Bezug auf die Energieeffizienz.

Die Erfindung betrifft auch ein Verfahren zum Transportieren und Halten eines Werkstücks auf einer Fördereinrichtung. Ein solches Verfahren könnte folgendermaßen beschrieben werden:

Verfahren zum Transportieren und Halten eines Werkstücks 6 auf einer Transportvorrichtung 1 mit einem luftdurchlässigen Transportband 2 (oder einem luftdurchlässigen Abschnitt 8), bei dem das Werkstück 6 mittels eines von einer Saugvorrichtung 7 in einer Unterdruckkammer 5 erzeugten Unterdrucks auf der Fördereinrichtung 1 (oder dem Transportband 2) gehalten wird, wobei mittels einer Sensoreinrichtung 10 und/oder einer Steuereinrichtung ein Belegungsverhältnis zwischen Werkstück 6 und dem Transportband 2 (oder dem luftdurchlässigen Abschnitt 8) der Fördereinrichtung erfasst wird und die Leistung oder Drehzahl der Saugvorrichtung so von einer Steuereinrichtung 12 zwischen zumindest einer Minimaldrehzahl M1 und einer Maximaldrehzahl Mₘₐₓ gesteuert wird, dass im Leerlaufbetrieb der Transportvorrichtung 1 die Saugvorrichtung 7 mit der Minimaldrehzahl M1 läuft und im Betrieb mit einem Werkstück 6 auf der Fördereinrichtung 2 die Leistung/Drehzahl der Saugvorrichtung 7 in Abhängigkeit des Anstiegs des Belegungsverhältnisses ausgehend von der Maximaldrehzahl Mₘₐₓ abnimmt.

Dieses Verfahren kann mit besonderen Ausgestaltungen der erfindungsgemäßen Vorrichtung kombiniert werden, um neue Verfahrensvarianten auszubilden.

## Patentansprüche

1. Transportvorrichtung (1) zum Transportieren eines oder mehrerer plattenförmiger Werkstücke (6) für eine Bearbeitungsvorrichtung, umfassend:
eine Fördereinrichtung (2), die das zumindest eine Werkstück tragen und auf der das zumindest eine Werkstück bearbeitet werden kann;
eine Saugvorrichtung (7), die zum Halten des zumindest einen Werkstücks (6) auf der Fördereinrichtung (2) einen Unterdruck erzeugt;
wobei die Fördereinrichtung (2) luftdurchlässig ist, so dass ein auf der Fördereinrichtung (2) befindliches Werkstück (6) mittels des durch die Saugvorrichtung (7) erzeugten Unterdrucks auf der Fördereinrichtung (2) gehalten wird;
**dadurch gekennzeichnet, dass**
die Transportvorrichtung (1) ferner eine Sensoreinrichtung (10) umfasst, bevorzugt Tastrollen, die ein Werkstück (6) auf der Fördereinrichtung (2) erfassen kann, und eine Steuereinrichtung (12) umfasst, die zum Steuern der Drehzahl der Saugvorrichtung eingerichtet ist, und wobei mittels der Sensoreinrichtung (10) und/oder der Steuereinrichtung (12) ein Belegungsverhältnis berechnet wird;
wobei die Steuereinrichtung (12) die Drehzahl der Saugvorrichtung (7) zwischen einer ersten Minimaldrehzahl (M1), einer zweiten Minimaldrehzahl (M2) und einer Maximaldrehzahl (Mₘₐₓ) in Abhängigkeit des Belegungsverhältnisses so steuert, dass im Leerlaufbetrieb der Transportvorrichtung (1) die Saugvorrichtung (7) mit der ersten Minimaldrehzahl (M1) läuft und im Betrieb mit einem Werkstück (6) auf der Fördereinrichtung (2) die Drehzahl der Saugvorrichtung (7) bei einem Anstieg des Belegungsverhältnisses zwischen der Maximaldrehzahl (Mₘₐₓ) bis zur zweiten Minimaldrehzahl (M2) abnehmend gesteuert ist.

2. Transportvorrichtung (1) nach Anspruch 1, wobei die Steuereinrichtung (12) eingerichtet ist die Saugvorrichtung (7) so zu steuern, dass sie mit der Maximaldrehzahl (Mₘₐₓ) läuft, wenn das Werkstück eine ausreichende Fläche auf der Fördereinrichtung abdeckt, so dass es von der Saugvorrichtung auf der Fördereinrichtung für die Bearbeitung des Werkstücks gehalten werden kann.

3. Transportvorrichtung (1) nach Anspruch 1 oder 2, bei der die Drehzahl bei der Förderung eines Werkstücks ausgehend von der Maximaldrehzahl stetig und vorzugsweise im Wesentlichen linear bis zu einem Belegungsverhältnis von 75%-100% abnimmt.

4. Transportvorrichtung (1) nach Anspruch 3, bei der die zweite Minimaldrehzahl (M2) größer als die erste Minimaldrehzahl (M1) oder gleich der ersten Minimaldrehzahl (M1) ist.

5. Transportvorrichtung (1) nach einem der vorhergehenden Ansprüche, bei der die Drehzahl der Saugvorrichtung (7) von der Steuereinrichtung (12) mittels der Energiezufuhr gesteuert wird.

6. Transportvorrichtung (1) nach einem der vorhergehenden Ansprüche, bei dem die Saugvorrichtung einen Ventilator umfasst.

7. Transportvorrichtung (1) nach einem der vorhergehenden Ansprüche, wobei die Transportvorrichtung ferner umfasst:
eine Unterdruckkammer (5), die unter der Tragfläche der Fördereinrichtung (2) angeordnet ist, wobei die Saugvorrichtung mit der Unterdruckkammer über eine Rohrleitung 14 verbunden ist; und/oder
eine Antriebseinheit (3), die die Fördereinrichtung (2) antreibt.

8. Transportvorrichtung (1) nach einem der vorhergehenden Ansprüche, wobei das Belegungsverhältnis ein Verhältnis zwischen einem luftdurchlässigen Abschnitt (8) und dem vom Werkstück belegten Teil des luftdurchlässigen Abschnitts (8) ist.

9. Transportvorrichtung (1) nach einem der vorhergehenden Ansprüche, bei der die Drehzahl bei der Förderung eines Werkstücks (6) ausgehend von der Maximaldrehzahl in Sprüngen abnimmt, vorzugsweise in vier Sprüngen.

10. Bearbeitungsvorrichtung mit einer Transportvorrichtung (1) nach einem der vorhergehenden Ansprüche und ferner einer Bearbeitungseinheit (15) zum bevorzugt spanenden Bearbeiten eines auf der Transportvorrichtung (1) gehaltenen Werkstücks (6).

11. Verfahren zum Transportieren und Halten eines plattenförmigen Werkstücks (6) auf einer Transportvorrichtung (1) mit einem luftdurchlässigen Transportband (2) oder einem luftdurchlässigen Abschnitt (8), bei dem das Werkstück (6) mittels eines von einer Saugvorrichtung (7) in einer Unterdruckkammer (5) erzeugten Unterdrucks auf der Fördereinrichtung (1) oder dem Transportband (2) gehalten wird,
wobei mittels einer Sensoreinrichtung (10) und/oder einer Steuereinrichtung ein Belegungsverhältnis zwischen Werkstück (6) und dem Transportband (2) oder dem luftdurchlässigen Abschnitt (8) der Fördereinrichtung erfasst wird, und die Leistung oder Drehzahl der Saugvorrichtung so von einer Steuereinrichtung (12) zwischen ersten einer Minimaldrehzahl (M1), einer zweiten Minimaldrehzahl (M2) und einer Maximaldrehzahl (Mₘₐₓ) gesteuert wird, dass im Leerlaufbetrieb der Transportvorrichtung (1) die Saugvorrichtung (7) mit der Minimaldrehzahl (M1) läuft und im Betrieb mit einem Werkstück (6) auf der Fördereinrichtung (2) die Leistung/Drehzahl der Saugvorrichtung (7) in Abhängigkeit des Anstiegs des Belegungsverhältnisses ausgehend von der Maximaldrehzahl (Mₘₐₓ) bis zur zweiten Minimaldrehzahl (M2) abnimmt.

12. Verfahren nach Anspruch 11, bei dem die Saugvorrichtung (7) durch die Steuereinrichtung so gesteuert wird, dass sie mit der Maximaldrehzahl (Mₘₐₓ) läuft, wenn das Werkstück eine ausreichende Fläche auf der Fördereinrichtung abdeckt, so dass es von der Saugvorrichtung auf der Fördereinrichtung für die Bearbeitung des Werkstücks gehalten werden kann.

13. Verfahren nach einem der Ansprüche 11-12, bei dem die Drehzahl bei der Förderung eines Werkstücks ausgehend von der Maximaldrehzahl stetig und vorzugsweise im Wesentlichen linear bis zu einem Belegungsverhältnis von 75%-100% abnimmt.

14. Verfahren nach einem der Ansprüche 11-13, bei dem die zweite Minimaldrehzahl (M2) größer als die erste Minimaldrehzahl (M1) oder gleich der ersten Minimaldrehzahl (M1) ist.

## Claims

1. Transport apparatus (1) for transporting one or more board-like workpieces (6) for a processing apparatus, comprising:
a conveying device (2) which can carry the at least one workpiece and on which the at least one workpiece can be processed;
a suction apparatus (7) which generates a vacuum for holding the at least one workpiece (6) on the conveying device (2);
wherein the conveying device (2) is air-permeable, so that a workpiece (6) located on the conveying device (2) is held on the conveying device (2) by means of the vacuum generated by the suction apparatus (7);
**characterised in that**
the transport apparatus (1) further comprises a sensor device (10), preferably sensing rollers, which can detect a workpiece (6) on the conveying device (2), and comprises a control device (12) which is designed to control the speed of rotation of the suction apparatus, and wherein an occupancy ratio is calculated by means of the sensor device (10) and/or the control device (12);
wherein the control device (12) controls the speed of rotation of the suction apparatus (7) between a first minimum speed (M1), a second minimum speed (M2) and a maximum speed (Mₘₐₓ) as a function of the occupancy ratio in such a way that, in the no-load mode of the transport apparatus (1), the suction apparatus (7) runs at the first minimum speed (M1) and, during operation with a workpiece (6) on the conveying device (2), the speed of the suction apparatus (7) is controlled to decrease between the maximum speed (Mₘₐₓ) and the second minimum speed (M2) with an increase in the occupancy ratio.

2. Transport apparatus (1) according to claim 1, wherein the control device (12) is designed to control the suction apparatus (7) in such a way that it runs at the maximum speed (Mₘₐₓ) when the workpiece covers a sufficient area on the conveying device, so that it can be held by the suction apparatus on the conveying device for processing of the workpiece.

3. Transport apparatus (1) according to claim 1 or 2, in which the speed of rotation during the conveying of a workpiece decreases constantly and preferably substantially linearly up to an occupancy ratio of 75%-100%, starting from the maximum speed.

4. Transport apparatus (1) according to claim 3, in which the second minimum speed (M2) is greater than the first minimum speed (M1) or equal to the first minimum speed (M1).

5. Transport apparatus (1) according to any of the preceding claims, in which the speed of rotation of the suction apparatus (7) is controlled by the control device (12) by means of the energy supply.

6. Transport apparatus (1) according to any of the preceding claims, in which the suction apparatus comprises a fan.

7. Transport apparatus (1) according to any of the preceding claims, wherein the transport apparatus further comprises:
a vacuum chamber (5) which is arranged below the bearing surface of the conveying device (2), wherein the suction apparatus is connected to the vacuum chamber via a pipe (14); and/or
a drive unit (3) which drives the conveying device (2).

8. Transport apparatus (1) according to any of the preceding claims, wherein the occupancy ratio is a ratio between an air-permeable section (8) and the portion of the air-permeable section (8) occupied by the workpiece.

9. Transport apparatus (1) according to any of the preceding claims, in which the speed during the conveying of a workpiece (6) decreases in steps, preferably in four steps, starting from the maximum speed.

10. Processing apparatus having a transport apparatus (1) according to any of the preceding claims and further a processing unit (15) preferably for machining of a workpiece (6) held on the transport apparatus (1).

11. Method for transporting and holding a board-like workpiece (6) on a transport apparatus (1) having an air-permeable conveyor belt (2) or an air-permeable section (8), in which the workpiece (6) is held on the conveying device (1) or the conveyor belt (2) by means of a vacuum generated by a suction apparatus (7) in a vacuum chamber (5),
wherein by means of a sensor device (10) and/or a control device, an occupancy ratio between the workpiece (6) and the conveyor belt (2) or the air-permeable section (8) of the conveying device is detected, and the capacity or speed of rotation of the suction apparatus is controlled by a control device (12) between a first minimum speed (M1), a second minimum speed (M2) and a maximum speed (Mₘₐₓ) in such a way that, in the no-load mode of the transport apparatus (1), the suction apparatus (7) runs at the first minimum speed (M1) and, during operation with a workpiece (6) on the conveying device (2), the capacity/speed of the suction apparatus (7) decreases as a function of the increase in the occupancy ratio, starting from the maximum speed (Mₘₐₓ) down to the second minimum speed (M2).

12. Method according to claim 11, in which the suction apparatus (7) is controlled by the control device in such a way that it runs at the maximum speed (Mₘₐₓ) when the workpiece covers a sufficient area on the conveying device, so that it can be held by the suction apparatus on the conveying device for processing of the workpiece.

13. Method according to either of claims 11-12, in which the speed of rotation during the conveying of a workpiece decreases constantly and preferably substantially linearly, starting from the maximum speed, up to an occupancy ratio of 75%-100%.

14. Method according to any of claims 11-13, in which the second minimum speed (M2) is greater than the first minimum speed (M1) or equal to the first minimum speed (M1).

## Revendications

1. Système de transport (1), pour le transport d'une ou de plusieurs pièces à usiner (6) en forme de plaques pour une installation d'usinage, comprenant :
un dispositif de convoyage (2), pouvant supporter la ou les pièces à usiner, et sur lequel la ou les pièces à usiner peuvent être usinées ;
un dispositif d'aspiration (7), qui génère une dépression pour le maintien de la ou des pièces à usiner (6) sur le dispositif de convoyage (2) ;
le dispositif de convoyage (2) étant perméable à l'air, si bien qu'une pièce à usiner (6) se trouvant sur le dispositif de convoyage (2) est maintenue sur ledit dispositif de convoyage (2) au moyen de la dépression générée par le dispositif d'aspiration (7) ;
**caractérisé en ce que**
ledit système de transport (1) comprend en outre un dispositif de capteur (10), préférentiellement des galets palpeurs, pouvant saisir une pièce à usiner (6) sur le dispositif de convoyage (2), et un dispositif de commande (12) prévu pour commander la vitesse du dispositif d'aspiration, un taux d'occupation étant calculé au moyen du dispositif de capteur (10) et/ou du dispositif de commande (12);
le dispositif de commande (12) commandant la vitesse du dispositif d'aspiration (7) entre une première vitesse minimale (M1), une deuxième vitesse minimale (M2) et une vitesse maximale (Mₘₐₓ) en fonction du taux d'occupation, de telle manière qu'en mode de fonctionnement à vide du système de transport (1), le dispositif d'aspiration (7) tourne à la première vitesse minimale (M1), et/ou qu'en mode de fonctionnement avec une pièce à usiner (6) sur le dispositif de convoyage (2), une diminution de la vitesse du dispositif d'aspiration (7) soit commandée depuis la vitesse maximale (Mₘₐₓ) jusqu'à une deuxième vitesse minimale (M2) en cas de croissance du taux d'occupation.

2. Système de transport (1) selon la revendication 1, où le dispositif de commande (12) est prévu pour commander le dispositif d'aspiration (7) de telle manière que celui-ci tourne à vitesse maximale (Mₘₐₓ) quand la pièce à usiner couvre une surface suffisante sur le dispositif de convoyage, de manière à pouvoir être maintenue par le dispositif d'aspiration sur le dispositif de convoyage pour l'usinage de la pièce à usiner.

3. Système de transport (1) selon la revendication 1 ou 2, où la vitesse décroît continûment depuis la vitesse maximale lors du convoyage d'une pièce à usiner, et de préférence sensiblement linéairement jusqu'à un taux d'occupation de 75 % à 100 %.

4. Système de transport (1) selon la revendication 3, où la deuxième vitesse minimale (M2) est supérieure à la première vitesse minimale (M1) ou égale à la première vitesse minimale (M1).

5. Système de transport (1) selon l'une des revendications précédentes, où la vitesse du dispositif d'aspiration (7) est commandée par le dispositif de commande (12) au moyen de l'alimentation.

6. Système de transport (1) selon l'une des revendications précédentes, où le dispositif d'aspiration comprend un ventilateur.

7. Système de transport (1) selon l'une des revendications précédentes, où ledit système de transport comprend en outre :
une chambre de dépression (5) disposée en dessous de la surface de support du dispositif de convoyage (2), le dispositif d'aspiration étant relié à la chambre de dépression par une conduite (14) ; et/ou
une unité d'entraînement (3) entraînant le dispositif de convoyage (2).

8. Système de transport (1) selon l'une des revendications précédentes, où le taux d'occupation est un rapport entre une section (8) perméable à l'air et la partie occupée de ladite section (8) perméable à l'air occupée par la pièce à usiner.

9. Système de transport (1) selon l'une des revendications précédentes, où la vitesse décroît par pas, préférentiellement en quatre pas, depuis la vitesse maximale lors du convoyage d'une pièce à usiner (6).

10. Installation d'usinage avec un système de transport (1) selon l'une des revendications précédentes et en outre une unité d'usinage (15) pour l'usinage, préférentiellement avec enlèvement de matière, d'une pièce à usiner (6) maintenue sur le système de transport (1).

11. Procédé de transport et de maintien d'une pièce à usiner (6) sur un système de transport (1) avec un tapis de transport (2) perméable à l'air ou une section (8) perméable à l'air, où la pièce à usiner (6) est maintenue sur le dispositif de convoyage (1) ou le tapis de transport (2) au moyen d'une dépression générée par un dispositif d'aspiration (7) dans une chambre de dépression (5),
où un taux d'occupation entre la pièce à usiner (6) et le tapis de transport (2) ou la section (8) perméable à l'air du dispositif de convoyage est déterminé au moyen d'un dispositif de capteur (10) et/ou d'un dispositif de commande, et la puissance ou la vitesse du dispositif d'aspiration sont commandées par un dispositif de commande (12) entre une première vitesse minimale (M1), une deuxième vitesse minimale (M2) et une vitesse maximale (Mₘₐₓ), de telle manière qu'en mode de fonctionnement à vide du système de transport (1), le dispositif d'aspiration (7) tourne à vitesse minimale (M1), et/ou qu'en mode de fonctionnement avec une pièce à usiner (6) sur le dispositif de convoyage (2), une diminution de la puissance/vitesse du dispositif d'aspiration (7) soit commandée depuis la vitesse maximale (Mₘₐₓ) jusqu'à la deuxième vitesse minimale (M2) en fonction de la croissance du taux d'occupation.

12. Procédé selon la revendication 11, où le dispositif d'aspiration (7) est commandé par le dispositif de commande de manière à tourner à vitesse maximale (Mₘₐₓ) quand la pièce à usiner couvre une surface suffisante sur le dispositif de convoyage, de manière à pouvoir être maintenue par le dispositif d'aspiration sur le dispositif de convoyage pour l'usinage de la pièce à usiner.

13. Procédé selon l'une des revendications 11-12, où la vitesse décroît continûment depuis la vitesse maximale lors du convoyage d'une pièce à usiner, et de préférence sensiblement linéairement jusqu'à un taux d'occupation de 75 % à 100 %.

14. Procédé selon l'une des revendications 11-13, où la deuxième vitesse minimale (M2) est supérieure à la première vitesse minimale (M1) ou égale à la première vitesse minimale (mol).
